# EUROPÄISCHE PATENTSCHRIFT

(11) **EP 2 458 997 B1**
(45) Veröffentlichungstag und Bekanntmachung des Hinweises auf die Patenterteilung: **12.09.2018**
(21) Anmeldenummer: 10734749.4
(22) Anmeldetag: 26.07.2010
(51) Int. Cl.: A01P 3/00, A01N 25/02, A01N 35/04, A01N 43/40, A01N 43/653

(54) **FLÜSSIGE ZUSAMMENSETZUNG ENTHALTEND EIN PESTIZID, EIN NICHTIONISCHES TENSID UND EIN PROPIONAMID**
LIQUID COMPOSITION COMPRISING A PESTICIDE, A NONIONIC SURFACTANT AND A PROPIONAMIDE
COMPOSITION LIQUIDE CONTENANT UN PESTICIDE, UN TENSIOACTIF NON-IONIQUE ET UN AMIDE PROPIONIQUE

(30) Priorität: 31.07.2009 EP 09166964
(43) Veröffentlichungstag der Anmeldung: 06.06.2012
(73) Patentinhaber: BASF SE, 67056 Ludwigshafen am Rhein (DE)
(72) Erfinder: SOWA, Christian, 67435 Neustadt (DE); LADNER, Wolfgang, 67136 Fußgönheim (DE); LANVER, Andreas, 68165 Mannheim (DE)
(74) Vertreter: BASF IP Association
(86) Internationale Anmeldenummer: PCT/EP2010/060766
(87) Internationale Veröffentlichungsnummer: WO 2011/012562

(56) Entgegenhaltungen:
- WO-A1-2009/133181
- DATABASE WPI Week 200524 Thomson Scientific, London, GB; AN 2005-225615 XP002655032, & JP 2005 047885 A (IDEMITSU KOSAN CO LTD) 24. Februar 2005 (2005-02-24) in der Anmeldung erwähnt
- DATABASE WPI Week 200674 Thomson Scientific, London, GB; AN 2006-717166 XP002655033, & WO 2006/075373 A1 (IDEMITSU KOSAN CO LTD) 20. Juli 2006 (2006-07-20) in der Anmeldung erwähnt

## Beschreibung

Gegenstand der vorliegenden Erfindung ist eine flüssige Zusammensetzung enthaltend ein Pestizid in gelöster Form, ein nichtionisches Tensid, ein anionisches Tensid und ein Propionamid der nachstehend genannten Formel I. Die Erfindung betrifft weiterhin ein Verfahren zur Herstellung der erfindungsgemäßen Zusammensetzung indem man das Pestizid, das nichtionische Tensid, das anionische Tensid und das Propionamid miteinander in Kontakt bringt. Sie betrifft auch eine Verwendung der erfindungsgemäßen Zusammensetzung zur Herstellung einer Emulsion, sowie eine Emulsion enthaltend Wasser und die erfindungsgemäße Zusammensetzung. Kombinationen bevorzugter Merkmale mit anderen bevorzugten Merkmalen werden von der vorliegenden Erfindung umfasst.

Im Allgemeinen werden Pestizide nicht als Reinstoffe, sondern je nach Anwendungsgebiet und gewünschter physikalischer Beschaffenheit der Anwendungsform in Kombination mit bestimmten Hilfsstoffen eingesetzt, d. h. sie werden "formuliert". Unabhängig vom Formulierungstyp sowie davon, ob die Formulierungen einen oder mehrere Wirkstoffe enthalten, ist man insbesondere im landwirtschaftlichen Bereich bestrebt, eine möglichst hohe Wirkstoffkonzentration der jeweiligen Formulierung zu erreichen, da eine hohe Konzentration der Wirkstoffe eine Reduktion der auszubringenden Volumina ermöglicht und folglich Materialeinsparungen im Bereich der ausgebrachten Hilfsstoffe, sowie Einsparungen im Verpackungs- und Logistik-Bereich nach sich zieht. Daher sind hochkonzentrierte stabile Formulierungen und Coformulierungen mit umweltfreundlichen Hilfsstoffen von grundsätzlichem Interesse.

Beta-Alkoxypriopionamide und deren Herstellverfahren sind allgemein bekannt: JP 2005-47885 offenbart beta-Alkoxypropionamide, ihre Herstellung und ihre Verwendung in der Landwirtschaft. WO 2007/148574 offenbart beta-Alkoxypropionamide zur Entfernung von Photolacken auf Elektronikbauteilen. US 2,704,280 offenbart ein Waschmittel bestehend aus einem wasserlöslichen, organischen Sulfat oder sulfonat, und einem organischen Gerüststoff der Gruppe der Alkoxyalkansäureamide. WO 2006/075373 offenbart beta-Alkoxypropionamide, ihre Herstellung und ihre Verwendung. WO 2009/133181 (Stand der Technik gemäß Art. 54(3) EPÜ) beschreibt Etheramidverbindungen.

Aufgabe der vorliegenden Erfindung war es eine Zusammensetzung zu finden in der hohe Konzentrationen von Pestiziden, insbesondere schlecht wasserlöslichen Pestiziden, klar gelöst werden können. Des weiteren sollte die Zusammensetzung nach Zusatz von Wasser eine stabile Emulsion bilden. Die Zusammensetzung sollte außerdem aus Bestandteilen bestehen, die zur agrochemischen Behandlung von Pflanzen eingesetzt werden können.

Die Aufgabe wurde gelöst durch ein flüssiges Konzentrat enthaltend ein Pestizid in gelöster Form, ein nichtionisches Tensid, ein anionisches Tensid und ein Propionamid der Formel I 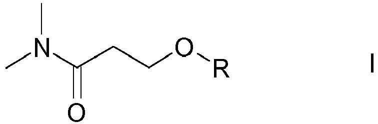 wobei R für einen linearen oder verzweigten C₃ bis C₁₂ Alkylrest steht und wobei das Pestizid zu höchstens 20 g/l bei 20 °C in Wasser löslich. R steht bevorzugt für einen linearen oder verzweigten C₃ bis C₁₀ Alkylrest, besonders bevorzugt für einen C₄ bis C₈ Alkylrest, und insbesondere für einen C₆ bis C₈ Alkylrest. Der Alkylrest ist bevorzugt frei von Heteroatomen. Beispiele für den Alkylrest sind lineare oder verzweigte Propyl-, Butyl-, Pentyl-, Hexyl-, Heptyl- oder Octyl-, Nonyl-, Decyl-, oder Dodecyl-Reste. Speziell bevorzugt steht R für iso-Butyl, n-Hexyl, 2-Ethylhexyl, 2-Propylheptyl, 3,5,5-Trimethylhexyl, 7-Methyloctyl, 8-Methylnonyl, oder n-Decyl. Insbesondere steht R für iso-Butyl, n-Hexyl, 2-Ethylhexyl, 2-Propylheptyl, 3,5,5-Trimethylhexyl, 7-Methyloctyl, 8-Methylnonyl, oder n-Decyl; insbesondere für iso-Butyl, n-Hexyl, 2-Ethylhexyl; und ganz speziell für 2-Ethylhexyl.

Die **Propionamide** der Formel I und ihre Herstellung sind allgemein bekannt, beispielsweise aus den oben genannten Schriften JP 2005-47885, US 2,704,280 und WO 2007/148574. Meist werden die Propionamide erhalten durch Addition von N,N-Dimethylacrylamid an den entsprechenden Alkohol. Bei dem Alkohol kann es sich auch um eine Mischung von Alkohlen handeln. Das Reaktionsprodukt kann destillativ aufgereinigt werden. Die eingesetzten Propionamide haben üblicherweise eine Reinheit von mindestens 90 Gew.%, bevorzugt mindestens 95 Gew.%, und insbesondere mindestens 99 Gew.%.

Das Konzentrat kann 5 bis 90 Gew.%, bevorzugt 15 bis 80 Gew.% und insbesondere 25 bis 70 Gew.% Propionamid enthalten.

Das **Konzentrat** ist eine flüssige Zusammensetzung enthaltend ein Pestizid in gelöster Form, ein nichtionisches Tensid, und ein Propionamid der Formel I. Flüssig bedeutet, dass die Viskosität des Konzentrats bei 20 °C höchstens 5.000 mPas, bevorzugt höchstens 500 mPas und insbesondere höchstens 200 mPas beträgt. Das Konzentrat ist bevorzugt eine klare Lösung.

Das **Pestizid** liegt in gelöster Form im Konzentrat vor. Das bedeutet, dass mindestens 90 Gew.%, bevorzugt mindestens 99 Gew.% und insbesondere mindestens 99,9 Gew.% des im Konzentrat vorhandenen Pestizides in gelöster Form vorliegen. Üblicherweise ist mit dem Auge keine Pestizidpartikel im Konzentrat zu erkennen.

Das Konzentrat kann 0,5 bis 60 Gew.%, bevorzugt 2 bis 50 Gew.%, und insbesondere 5 bis 40 Gew.% Pestizid enthalten.

Der Begriff Pestizid bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide und Herbizide, insbesondere Fungizide zu höchstens 20 g/l, bevorzugt zu höchstens 1 g/l und insbesondere zu höchstens 0,2 g/l bei 20 °C in Wasser löslich. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Beispiele für Fungizide sind:
A) Strobilurine:
   Azoxystrobin, Dimoxystrobin, Enestroburin, Fluoxastrobin, Kresoxim-methyl, Metominostrobin, Orysastrobin, Picoxystrobin, Pyraclostrobin, Pyribencarb, Trifloxystrobin, 2-(2-(6-(3-Chlor-2-methyl-phenoxy)-5-fluor-pyrimidin-4-yloxy)-phenyl)-2-methoxy-imino-N-methyl-acetamid, 2-(ortho-((2,5-Dimethylphenyl-oxymethylen)phenyl)-3-methoxy-acrylsäuremethylester, 3-Methoxy-2-(2-(N-(4-methoxy-phenyl)-cyclopro-panecarboximidoylsulfanylmethyl)-phenyl)-acrylsäuresäuremethylester, 2-(2-(3-(2,6-dichlorphenyl)-1-methyl-allylideneaminooxymethyl)-phenyl)-2-methoxy-imino-N-methyl-acetamide;
B) Carbonsäureamide:
   - Carbonsäureanilide: Benalaxyl, Benalaxyl-M, Benodanil, Bixafen, Boscalid, Carboxin, Fenfuram, Fenhexamid, Flutolanil, Furametpyr, Isopyrazam, Isotianil, Kiralaxyl, Mepronil, Metalaxyl, Metalaxyl-M (Mefenoxam), Ofurace, Oxadixyl, Oxycarboxin, Penflufen (N-(2-(1,3-Dimethyl-butyl)-phenyl)-1,3-dimethyl-5-fluor-1H-pyrazol-4-carboxamid), Penthiopyrad, Sedaxane, Tecloftalam, Thifluzamide, Tiadinil, 2-Amino-4-methyl-thiazol-5-carboxanilid, 2-Chlor-N-(1,1,3-trimethyl-indan-4-yl)nicotinamid, N-(3',4',5'-Trifluorbiphenyl-2-yl)-3-difluormethyl-1-methyl-1H-pyrazol-4-carboxamid, N-(4'-Trifluormethylthiobiphenyl-2-yl)-3-difluormethyl-1-methyl-1H-pyrazol-4-carboxamid, N-(2-(1,3,3-Trimethyl-butyl)-phenyl)-1,3-dimethyl-5-fluor-1H-pyrazol-4-carboxamid;
   - Carbonsäuremorpholide: Dimethomorph, Flumorph, Pyrimorph;
   - Benzoesäureamide: Flumetover, Fluopicolide, Fluopyram, Zoxamid, N-(3-Ethyl-3,5,5-trimethylcyclohexyl)-3-formylamino-2-hydroxy-benzamid;
   - Sonstige Carbonsäureamide: Carpropamid, Diclocymet, Mandipropamid, Oxytetracyclin, Silthiofam, N-(6-methoxy-pyridin-3-yl)cyclopropancarbonsäureamid;
C) Azole:
   - Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol, 1-(4-Chlor-phenyl)-2-([1,2,4]triazol-1 -yl)-cycloheptanol;
   - Imidazole: Cyazofamid, Imazalil, Imazalilsulfat, Pefurazoat, Prochloraz, Triflumizol;
   - Benzimidazole: Benomyl, Carbendazim, Fuberidazole, Thiabendazol;
   - Sonstige: Ethaboxam, Etridiazol, Hymexazol, 2-(4-Chlor-phenyl)-N-[4-(3,4-dimethoxy-phenyl)-isoxazol-5-yl]-2-prop-2-inyloxy-acetamid;
D) Stickstoffhaltige Heterocyclylverbindungen
   - Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin, 2,3,5,6-Tetrachlor-4-methansulfonylpyridin, 3,4,5-Trichlor-pyridin-2,6-dicarbonitril, N-(1-(5-Brom-3-chlor-pyridin-2-yl)-ethyl)-2,4-dichlornicotinamid, N-((5-Brom-3-chlor-pyridin-2-yl)-methyl)-2,4-dichlornicotinamid;
   - Pyrimidine: Bupirimat, Cyprodinil, Diflumetorim, Fenarimol, Ferimzone, Mepanipyrim, Nitrapyrin, Nuarimol, Pyrimethanil;
   - Piperazine: Triforine;
   - Pyrrole: Fludioxonil, Fenpiclonil;
   - Morpholine: Aldimorph, Dodemorph, Dodemorphacetat, Fenpropimorph, Tridemorph;
   - Piperidine: Fenpropidin;
   - Dicarboximide: Fluorimid, Iprodione, Procymidone, Vinclozolin;
   - nichtaromatische 5-Ring-Heterocyclen: Famoxadon, Fenamidon, Flutianil, Octhilinon, Probenazol, 5-Amino-2-isopropyl-3-oxo-4-ortho-tolyl-2,3-dihydropyrazol-1-thiocarbonsäureS-allylester;
   - sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquatmethylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1H-benzoimidazol, 5-Chlor-7-(4-methylpiperidin-1-yl)-6-(2,4,6-trifluor-phenyl)-[1,2,4]triazolo[1,5-a]pyrimidin, 5-Ethyl-6-octyl-[1,2,4]triazolo[1,5-a]pyrimidin-7-ylamin;
E) Carbamate und Dithiocarbamate
   - Thio- und Dithiocarbamate: Ferbam, Mancozeb, Maneb, Metam, Methasulphocarb, Metiram, Propineb, Thiram, Zineb, Ziram;
   - Carbamate: Diethofencarb, Benthiavalicarb, Iprovalicarb, Propamocarb, Propamocarb-hydrochlorid, Valiphenal, N-(1-(1-(4-Cyanophenyl)ethansulfonyl)-but-2-yl)carbaminsäure-(4-fluorphenyl)ester;
F) Sonstige Fungizide
   - Guanidine: Dodine, Dodine freie Base, Guazatin, Guazatinacetat, Iminoctadin, Iminoctadin-triacetat, Iminoctadin-tris(albesilat);
   - Antibiotika: Kasugamycin, Kasugamycinhydrochlorid-Hydrat, Polyoxine, Streptomycin, Validamycin A;
   - Nitrophenylderivate: Binapacryl, Dicloran, Dinobuton, Dinocap, Nitrothal-isopropyl, Tecnazen;
   - Organometallverbindungen: Fentin-Salze wie beispielsweise Fentin-acetat, Fentinchlorid, Fentin-hydroxid;
   - Schwefelhaltige Heterocyclylverbindungen: Dithianon, Isoprothiolane;
   - Organophosphorverbindungen: Edifenphos, Fosetyl, Fosetyl-Aluminium, Iprobenfos, Phosphorige Säure und ihre Salze, Pyrazophos, Tolclofos-methyl;
   - Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
   - Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
   - Sonstige: Biphenyl, Bronopol, Cyflufenamid, Cymoxanil, Diphenylamin, Metrafenon, Mildiomycin, Oxin-Kupfer, Prohexadion-Calcium, Spiroxamin, Tolylfluanid, N-(Cyclo-propylmethoxyimino-(6-difluormethoxy-2,3-difluor-phenyl)-methyl)-2-phenylacetamid, N'-(4-(4-Chlor-3-trifluormethyl-phenoxy)-2,5-dimethyl-phenyl)-N-ethyl-N-methylformamidin, N'-(4-(4-Fluor-3-trifluormethyl-phenoxy)-2,5-dimethyl-phenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanyl-propoxy)-phenyl)-N-ethyl-N-methylformamidin, 2-{1-[2-(5-Methyl-3-trifluormethyl-pyrazol-1-yl)-acetyl]-piperidin-4-yl}-thiazol-4-carboxylsäure-methyl-(1,2,3,4-tetra-hydronaphthalen-1-yl)-amid, 2-{1-[2-(5-Methyl-3-trifluormethyl-pyrazol-1-yl)-acetyl]-piperidin-4-yl}-thiazol-4-carboxylsäure-methyl-(R)-1,2,3,4-tetrahydronaphthalen-1-yl-amid, Essigsäure-6-tert.-butyl-8-fluor-2,3-dimethyl-quinolin-4-yl-ester, Methoxy-essigsäure-6-tert.-butyl-8-fluor-2,3-dimethyl-quinolin-4-yl-ester, N-Methyl-2-{1-[2-(5-methyl-3-trifluormethyl-1H-pyrazol-1-yl)-acetyl]-piperidin-4-yl}-N-[(1R)-1,2,3,4-tetrahydro-naphthalen-1-yl]-4-thiazolcarboxamid.

Geeignete Beispiele für Wachstumsregulatoren sind:
Abscisinsäure, Amidochlor, Ancymidol , 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol , Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohexadion (Prohexadion-Calcium), Prohydrojasmon, Thidiazuron, Triapenthenol, Tributylphosphorotrithioat, 2,3,5-tri-Jodbenzoesäure, Trinexapac-ethyl und Uniconazol.

Geeignete Beispiele für Herbizide sind:
- Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
- Aminosäureanaloga: Bilanafos, Glyphosat, Glufosinat, Sulfosat;
- Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
- Bipyridyle: Diquat, Paraquat;
- Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
- Cyclohexanedione: Butroxydim, Clethodim, Cycloxydim, Profoxydim, Sethoxydim, Tepraloxydim, Tralkoxydim;
- Dinitroaniline: Benfluralin, Ethalfluralin, Oryzalin, Pendimethalin, Prodiamine, Trifluralin;
- Diphenylether: Acifluorfen, Aclonifen, Bifenox, Diclofop, Ethoxyfen, Fomesafen, Lactofen, Oxyfluorfen;
- Hydroxybenzonitrile: Bromoxynil, Dichlobenil, loxynil;
- Imidazolinone: Imazamethabenz, Imazamox, Imazapic, Imazapyr, Imazaquin, Imazethapyr;
- Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
- Pyrazine: Chloridazon, Flufenpyr-ethyl, Fluthiacet, Norflurazon, Pyridat;
- Pyridine: Aminopyralid, Clopyralid, Diflufenican, Dithiopyr, Fluridone, Fluroxypyr, Picloram, Picolinafen, Thiazopyr;
- Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, lodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
- Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam;
- Harnstoffe: Chlorotoluron, Daimuron, Diuron, Fluometuron, Isoproturon, Linuron, Methabenzthiazuron, Tebuthiuron;
- andere Hemmstoffe der Acetolactatsynthase: Bispyribac-Natrium, Cloransulam-Methyl, Diclosulam, Florasulam, Flucarbazone, Flumetsulam, Metosulam, Orthosulfamuron, Penoxsulam, Propoxycarbazone, Pyribambenz-Propyl, Pyribenzoxim, Pyriftalid, Pyriminobac-methyl, Pyrimisulfan, Pyrithiobac, Pyroxasulfon, Pyroxsulam;
- Sonstige: Amicarbazon, Aminotriazol, Anilofos, Beflubutamid, Benazolin, Bencarbazon, Benfluresat, Benzofenap, Bentazon, Benzobicyclon, Bromacil, Bromobutid, Butafenacil, Butamifos, Cafenstrole, Carfentrazone, Cinidon-Ethlyl, Chlorthal, Cinmethylin, Clomazone, Cumyluron, Cyprosulfamid, Dicamba, Difenzoquat, Diflufenzopyr, Drechslera monoceras, Endothal, Ethofumesat, Etobenzanid, Fentrazamide, Flumiclorac-Pentyl, Flumioxazin, Flupoxam, Fluorochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Pinoxaden, Pyraclonil, Pyraflufen-Ethyl, Pyrasulfotol, Pyrazoxyfen, Pyrazolynat, Quinoclamin, Saflufenacil, Sulcotrion, Sulfentrazon, Terbacil, Tefuryltrion, Tembotrion, Thiencarbazon, Topramezon, 4-Hydroxy-3-[2-(2-methoxy-ethoxymethyl)-6-trifluormethyl-pyridin-3-carbonyl]-bicyclo[3.2.1]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropyl-pyrimidin-4-carboxylsäuremethylester, 6-Chlor-3-(2-cyclopropyl-6-methyl-phenoxy)-pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethyl-ester und 4-Amino-3-chlor-6-(4-chloro-3-dimethylamino-2-fluor-phenyl)-pyridin-2-carboxylsäuremethylester.

Geeignete Beispiele für Insektizide sind:
- Organo(thio)phosphate: Acephat, Azamethiphos, Azinphos-methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoate, Phosalone, Phosmet, Phosphamidon, Phorate, Phoxim, Pirimiphos-Methyl, Profenofos, Prothiofos, Sulprophos, Tetrachlorvinphos, Terbufos, Triazophos, Trichlorfon;
- Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
- Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerat, Etofenprox, Fenpropathrin, Fenvalerate, Imiprothrin, Lambda-Cyhalothrin, Permethrin, Prallethrin, Pyrethrin I und II, Resmethrin, Silafluofen, tau-Fluvalinat, Tefluthrin, Tetramethrin, Tralomethrin, Transfluthrin, Profluthrin, Dimefluthrin,
- Hemmstoffe des Insektenwachstums: a) Chitinsynthese-Hemmstoffe: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson-Antagonisten: Halofenozid, Methoxyfenozid, Tebufenozid, Azadirachtin; c) Juvenoide: Pyriproxyfen, Methoprene, Fenoxycarb; d) Lipidbiosynthese-Hemmstoffe: Spirodiclofen, Spiromesifen, Spirotetramat;
- Nikotinreceptor-Agonisten/Antagonisten: Clothianidin, Dinotefuran, Imidacloprid, Thiamethoxam, Nitenpyram, Acetamiprid, Thiacloprid, 1-(2-chloro-thiazol-5-yl-methyl)-2-nitrimino-3,5-dimethyl-[1,3,5]triazinan;
- GABA-Antagonisten: Endosulfan, Ethiprol, Fipronil, Vaniliprol, Pyrafluprol, Pyriprol, 5-Amino-1-(2,6-dichlor-4-methyl-phenyl)-4-sulfinamoyl-1H-pyrazol-3-thiocarbon-säureamid;
- Macrocyclische Lactone: Abamectin, Emamectin, Milbemectin, Lepimectin, Spinosad, Spinetoram;
- Mitochondriale Elektronentransportketten-Inhibitor (METI) I Akarizide: Fenazaquin, Pyridaben, Tebufenpyrad, Tolfenpyrad, Flufenerim;
- METI II und III Substanzen: Acequinocyl, Fluacyprim, Hydramethylnon;
- Entkoppler: Chlorfenapyr;
- Hemmstoffe der oxidativen Phosphorylierung: Cyhexatin, Diafenthiuron, Fenbutatinoxid, Propargit;
- Hemmstoffe der Häutung der Insekten: Cryomazin;
- Hemmstoffe von, mixed function oxidases': Piperonylbutoxid;
- Natriumkanalblocker: Indoxacarb, Metaflumizon;
- Sonstige: Benclothiaz, Bifenazate, Cartap, Flonicamid, Pyridalyl, Pymetrozin, Schwefel, Thiocyclam, Flubendiamid, Chlorantraniliprol, Cyazypyr (HGW86); Cyenopyrafen, Flupyrazofos, Cyflumetofen, Amidoflumet, Imicyafos, Bistrifluron und Pyrifluquinazon.

Bevorzugte Pestizide sind Metconazole, Epoxiconazole und Boscalid.

Weiterhin bevorzugt sind Pestizide, die zu höchstens 1 g/l und insbesondere zu höchstens 0,2 g/l bei 20 °C in Wasser löslich sind. Beispiele für solche schlecht wasserlösliche Pestizide sind (Wasserlöslichkeit bei 20 °C jeweils in Klammer): Epoxiconazol (6,6 mg/l), Boscalid (4,6 mg/l), Metrafenon (0,5 mg/l), Metconazol (30,4 mg/l).

Das Konzentrat enthält ein nichtionisches Tensid, das heißt es enhält mindestens ein nichtionisches Tensid, besspielsweise ein oder zwei verschiedene nichtionische Tenside. Das Konzentrat kann 0,5 bis 40 Gew.%, bevorzugt 1 bis 30 Gew.% und insbesondere 2 bis 20 Gew.% nichtionisches Tensid enthalten.

Geeignete nicht-ionische Tenside sind Alkoxylate, N-alkylierte Fettsäureamide, Aminoxide, Ester, Blockpolymere oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fettsäureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside. Geeignete Blockpolymere sind Blockpolymere vom A-B oder A-B-A Typ umfassend Blöcke aus Polyethylenoxid und Polypropylenoxid oder vom A-B-C Typ umfassend Alkanol, Polyethylenoxid und Polypropylenoxid. Bevorzugte nichtionische Tenside sind Alkoxylate, wie Alkohole, Alkylphenole, Amine, Amide, Arylphenole, Fettsäuren oder Fettsäureester, die ethoxiliert wurden.

Das Konzentrat kann zusätzlich zum nichtionischen Tensid ein anionisches Tensid enthalten. Das bedeutet, dass das Konzentrat kann mindestens ein anionisches Tensid, beispielsweise ein oder zwei anionische Tenside enthalten kann. Das Konzentrat kann 0,5 bis 40 Gew.%, bevorzugt 1 bis 30 Gew.% und insbesondere 2 bis 20 Gew.% anionisches Tensid enthalten.

Geeignete anionische Tenside sind Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Sulfonate von Fettsäuren und Ölen, Sulfonate von ethoxylierten Alkylphenolen, Sulfonate von kondensierten Naphthalinen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate. Bevorzugte anionische Tenside sind Alkali-, Erdalkali- oder Ammoniumsalze von Sulfonaten, wie Alkylarylsulfonate, Diphenylsulfonate, alpha-Olefinsulfonate, Sulfonate von Fettsäuren und Ölen, Sulfonate von ethoxylierten Alkylphenolen, Sulfonate von kondensierten Naphthalinen, Sulfonate von Dodecyl und Tridecylbenzolen, Sulfonate von Naphthalinen und Alkylnaphthalinen, Sulfosuccinate oder Sulfosuccinamate. Besonders bevorzugte anionische Tenside sind Alkali-, Erdalkali- oder Ammoniumsalze von Alkylarylsulfonaten.

Das Konzentrat kann weitere Formulierungshilfsmittel enthalten, wobei sich die Wahl der Hilfsmittel üblicherweise nach der konkreten Anwendungsform richtet. Beispiele für geeignete Formulierungshilfsmittel sind Lösungsmittel, oberflächenaktive Stoffe (wie Tenside, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung).

Als Lösungsmittel (zusätzlich zu den als Lösungsmitteln eingesetzten Propionamiden der Formel I) kommen Wasser, organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Gykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Grundsätzlich können auch Lösungsmittelgemische verwendet werden sowie Gemische aus den vorstehend genannten Lösungsmitteln und Wasser. Das Lösungsmittel ist bevorzugt ein organisches Lösungsmittel. Das Konzentrat enthält meist höchstens 50 Gew.%, bevorzugt höchstens 20 Gew.% und insbesondere höchstens 5 Gew.% Lösungsmittel. In einer Ausführungsform enthält das Konzentrat höchstens 10 Gew.%, bevorzugt höchstens 1 Gew.% und insbesondere höchstens 0,1 Gew.% Wasser.

Als oberflächenaktive Stoffe kommen die Alkali-, Erdalkali-, Ammoniumsalze von aromatischen Sulfonsäuren, z. B. von Lignin-(Borresperse®-Typen, Borregaard, Norwegen), Phenol-, Naphthalin-(Morwet®-Typen, Akzo Nobel, USA) und Dibutylnaphthalinsulfonsäure (Nekal®-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, I-sotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen, Ligninsulfonate, Proteine, denaturierte Proteine, Polysaccharide (z.B. Methylcellulose), hydrophob modifizierte Stärken, Polyvinylalkohol (Mowiol®-Typen, Clariant, Schweiz), Polycarboxylate (Sokalan®-Typen, BASF, Deutschland), Polyalkoxylate, Polyvinylamin (Lupamin®-Typen, BASF, Deutschland), Polyethylenimin (Lupasol®-Typen, BASF, Deutschland), Polyvinylpyrrolidon und deren Copolymere in Betracht. Als Tenside kommen insbesondere anionische, kationische, nicht-ionische und amphotere Tenside, Blockpolymere und Polyelektrolyte in Betracht. Geeignete kationische Tenside sind quarternäre Tenside, beispielsweise quartäre AmmoniumVerbindungen mit einer oder zwei hydrophoben Gruppen, oder Salze langkettiger primärer Amine. Geeignete amphothere Tenside sind Alkylbetaine und Imidazoline. Geeignete Polyelektrolyte sind Polysäuren oder Polybasen. Beispiele für Polysäuren sind Alkalisalze von Polyacrylsäure. Beispiele für Polybasen sind Polyvinylamine oder Polyethylenamine.

Beispiele für Adjuvantien sind organisch modifizierte Polysiloxane, wie BreakThruS 240®; Alkoholalkoxylate, wie Atplus®245, Atplus®MBA 1303, Plurafac®LF und Lutensol® ON ; EO-PO-Blockpolymerisate, z. B. Pluronic® RPE 2035 und Genapol® B; Alkoholethoxylate, z. B. Lutensol® XP 80; und Natriumdioctylsulfosuccinat, z. B. Leophen® RA.

Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan®, CP Kelco), Rhodopol® 23 (Rhodia) oder Veegum® (R.T. Vanderbilt) oder Attaclay® (Engelhard Corp.).

Bakterizide können zur Stabilisierung der Zusammensetzung zugesetzt werden. Beispiele für Bakterizide sind solche basierend auf Diclorophen und Benzylalkoholhemiformal (Proxel® der Fa. ICI oder Acticide® RS der Fa. Thor Chemie und Kathon® MK der Fa. Rohm & Haas) sowie Isothiazolinonderivaten wie Alkylisothiazolinonen und Benzisothiazolinonen (Acticide® MBS der Fa. Thor Chemie). Beispiele für geeignete

**Frostschutzmittel** sind Ethylenglycol, Propylenglycol, Harnstoff und Glycerin. Beispiele für **Entschäumer** sind Silikonemulsionen (wie z. B. Silikon® SRE, Wacker, Deutschland oder Rhodorsil®, Rhodia, Frankreich), langkettige Alkohole, Fettsäuren, Salze von Fettsäuren, fluororganische Verbindungen und deren Gemische. Beispiele für **Kleber** sind Polyvinylpyrrolidon, Polyvinylacetat, Polyvinylalkohol und Celluloseether (Tylose®, Shin-Etsu, Japan).

Die vorliegende Erfindung betrifft weiterhin ein **Verfahren zur Herstellung** des erfindungsgemäßen Konzentrats indem man das Pestizid, das nichtionische Tensid, das anionische Tensid und das Propionamid der Formel I miteinander in Kontakt bringt. Das Verfahren ergibt eine flüssige Zusammensetzung, in der das Pestizid in gelöster Form vorliegt. Weitere Formulierungshilfmittel können ebenfalls zugesetzt werden. Das Verfahren kann bei 10 bis 200 °C, bevorzugt bei 20 bis 50 °C ablaufen. Die einzelnen Komponenten können in beliebiger Reihenfolgen miteinander in Kontakt gebracht werden, beispielweise unter Rühren, Schütteln oder Mischen. Bevorzugt legt man das Propionamid vor und vermischt es mit dem nichtionischen Tensid. In dieser Mischung wird anschließend das Pestizid gelöst. Optional kann das so hergestellte Konzentrat über ein Sieb (Maschenweite z.B. 100-200 µm) abfiltriert werden.

Die vorliegende Erfindung betrifft weiterhin eine **Emulsion** enthaltend Wasser und das erfindungsgemäße Konzentrat. Die Emulsion umfasst üblicherweise als kontinuierliche Phase eine wässrige Phase und als diskontinuierliche Phase eine Ölphase. Als diskontinuierliche Phase können zusätzlich feste Teilchen (z. B. von einem weiteren Pestizid) vorhanden sein (sog. Suspoemulsion). Die diskontinulierliche Phase bildet üblicherweise Tröpfchen in der wässerigen Phase. Die mittlere Tröpfchengröße liegt meist im Bereich von mindestens 0,1 µm, bevorzugt mindestens 0,3 µm, insbesondere mindestens 0,5 µm. Bevorzugt liegt sie im Bereich von 0,1 bis 1000 µm, insbesondere von 0,2 bis 5 µm und speziell von 0,4 bis 2 µm. Die mittlere Tröpfchengröße kann durch Teilchengrößenmessung mittels Laserbeugung, z.B. mit einem Malvern Mastersizer 2000, bestimmt werden.

Die Emulsion enthält bevorzugt Wasser, ein Pestizid in gelöster Form, ein nichtionisches Tensid, ein anionisches Tensid und ein Propionamid der Formel I. Die kontinuierliche Phase der Emulsion enthält üblicherweise Wasser. Die diskontinulierliche Phase der Emulsion enthält üblicherweise das Propionamid der Formel I. Bevorzugt enthält die Ölphase das Propionamid und das Pestizid in gelöster Form. Das heißt, dass das Pestizid in dem

Propionamid gelöst ist. In einer besonders bevorzugten Ausführungsform enthält die Emulsion Wasser und das erfindungsgemäße Konzentrat, wobei die kontinuierliche Phase Wasser enthält und die diskontinulierliche das Propionamid der Formel I und das Pestizid, welches in dem Propionamid gelöst ist.

Das Gewichtsverhältnis Wasser zu Konzentrat kann in der Emulsion im Bereich von 10.000 : 1 bis 1 : 10 liegen, bevorzugt von 3000 : 1 bis 1 : 1 und besonders bevorzugt von 1000 : 1 bis 10 : 1.

Die Emulsion kann direkt als wässrige Spritzbrühe (sog. Tankmix) eingesetzt werden. Der Tankmix wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegt sie zwischen 0,0001 und 10%, vorzugsweise zwischen 0,01 und 1%. Die Aufwandmengen liegen bei der Anwendung im Pflanzenschutz je nach Art des gewünschten Effektes zwischen 0,01 und 2,0 kg Wirkstoff pro ha.

Die Emulsion kann hergestellt werden, indem Wasser und das erfindungsgemäße Konzentrat miteinander in Kontakt gebracht werden, beispielsweise durch Rühren, Schütteln oder sonstiges Mischen. Die Herstellung kann beispielsweise direkt im Spritztank erfolgen.

Die vorliegende Erfindung betrifft weiterhin eine Verwendung des erfindungsgemäßen Konzentrats zur Herstellung einer Emulsion. Die Emulsion ist bevorzugt eine wässrige Emulsion, speziell eine Öl-in-Wasser Emulsion.

Die vorliegende Erfindung betrifft weiterhin die nicht-therapeutische Verwendung des erfindungsgemäßen Konzentrats oder der erfindungsgemäßen Emulsion zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Weiterhin betrifft die Erfindung die Verwendung des erfindungsgemäßen Konzentrats oder der erfindungsgemäßen Emulsion zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt.

Vorteile der vorliegenden Erfindung sind, dass in dem Konzentrat eine hohe Konzentration von schlecht wasserlöslichen Pestiziden, klar gelöst werden können. Das Konzentrat ist lagerstabil und das gelöste Pestizid kristallisiert praktisch nicht aus. Das Konzentrat bildet beim Mischen mit Wasser sehr leicht eine Emulsion. Dadurch kann beispielsweise der Landwirt eine sprühfähige Tankmischung herstellen durch einfaches Umrühren einer Mischung aus Wasser und Konzentrat. Die Emulsion der Tankmischung ist stabil (z.B. kristallisiert der Wirkstoff über mindestens 24 h nicht aus) und sprühfähig. Sie zeigt eine hervorragende Benetzung der Blattoberfläche.

Die nachfolgenden Beispiele erläutern die Erfindung ohne sie einzuschränken.

### Beispiele

### Beispiel 1 A, B und C: Herstellung von Konzentraten

Es wurden 14,6 g Metconazol, 5,0 g Calciumdodecylbenzolsulfonat (CAS Nr. 26264-06-2; 60 Gew.% mit 40 Gew.% 2-Ethylhexano-1-ol), 5,0 g Rizinusölethoxylat (40 mol Ethylenoxid pro mol) mit einem Propionamid auf ein Volumen von 100 ml aufgefüllt. Nach kurzem Rühren bei 20 °C erhielt man jeweils eine klare, farblose Lösung von Metconazol.

Als Propionamid wurden eingesetzt (Beispiel 1A, 1B bzw. 1C):
A) 3-Hexyloxy-N,N-dimethylpropionamid
B) 3-Isobutyloxy-N,N-dimethylpropionamid
C) 3-(2-Ethylhexyl)oxy-N,N-dimethylpropionamid

Die Propionamide wurden nach literaturbekannten Verfahren erhalten durch Addition von N,N-Dimethylacrylamid an den entsprechenden Alkohol und destillativ aufgereiningt.

### Beispiel 2: Löslichkeit von Pestiziden

Die maximale Löslichkeit von verschiedenen Pestiziden wurde bestimmt, indem zu gerührtem Lösungmittel ein Pestizid zugegeben wurde bis die Sättigung erreicht war. Wie Tabelle 1 zeigt, haben die Pestizide in den Propionamide A, B und C eine sehr hohe Löslichkeit (alle Angaben in Gew.% bei 22 °C). Genagen® 4166 ist ein N,N-Dimethylfettsäureamid (kommerziell erhältlich von Clariant). Purasolv EHL ist 2-Ethylhexylacetat (kommerziell erhältlich von Purac).

**Tabelle 1**

| Lösungsmittel | Epoxiconazol | Boscalid | Metrafenon | Metconazol |
|---|---|---|---|---|
| A | 10,0 % | 14,8 % | 19,8 % | 34,5 % |
| B | 13,2 % | 17,2 % | 23,0 % | 37,5 % |
| C | 7,4 % | 9,5 % | 14,8 % | 30,5 % |
| Genagen® 4166 | 7,8 % | 5,6 % | 18,0 % | 37,5 % |
| Purasolv® EHL | 6,5 % | 0,9 % | 5,1 % | 21,5 % |

### Beispiel 3: Physikalische Daten der wässrigen Spritzbrühe

Die Proben aus Beispiel 1A, B und C wurden auf die Konzentration einer üblichen Spritzbrühe mit Wasser (CIPAC Wasser D) verdünnt (jeweils 0,5 l Konzentrat aus Beispiel 1 auf 200 l Endvolumen) und mit folgenden Meßmethoden analysiert. Die Ergebnisse sind in Tabelle 2 zusammengestellt.

**Tabelle 2: Physikalische Daten von Proben aus Beispiel 1A, B und C**

| Probe | statische Oberflächenspannung [mN/m] | dynamische Oberflächenspannung [mN/m] | Spreitung [%] |
|---|---|---|---|
| A | 31,8 | 46,7 | 359 |
| B | 33,6 | 58,1 | 311 |
| C | 28,9 | 35,7 | 2205 |

Statische Oberflächenspannung: Die Messung der statischen Oberflächenspannung gibt einen Kennwert für die Oberflächenaktivität der Formulierung in der Spritzlösung. Es besteht eine Abhängigkeit von der Konzentration der oberflächenaktiven Formulierungsbestandteile. Oberhalb der kritischen Mizellkonzentration (CMC) bleibt die statische Oberflächenspannung weitgehend konstant. Die Messung erfolgt mit einem Messgerät der Firma Krüss (K 12 oder K 100) nach der Wilhelmy-Plattenmethode. Hierbei wird die Unterkante einer senkrecht aufgehängten Platinplatte mit der zu messenden Flüssigkeit in Kontakt gebracht und benetzt. Aus der Kraft, mit welcher die Platte in die Flüssigkeit gezogen wird, lässt sich die Oberflächenspannung der Flüssigkeit in mN/m berechnen. Von den angesetzten Spritzlösungen werden 40 ml in das Messgerät gefüllt und die Oberflächenspannung bestimmt Die statische Oberflächenspannung wird ermittelt, wenn fünf aufeinanderfolgende Messpunkte innerhalb von 0,1 mN/m übereinstimmen.
Aus der Literatur ergeben sich folgende Vergleichswerte bei 20°C:

| | |
|---|---|
| 20 - 25 mN/m | extrem niedrige Werte, typisch für Silikontenside |
| 26 - 30 mN/m | niedrige Werte sehr gute Tensideigenschaften |
| 30 - 35 mN/m | gute Netzwirkung |
| 73 mN/m | destilliertes Wasser |

Dynamische Oberflächenspannung (DST, dynamic surface tension): Die DST charakterisiert das Diffusionsverhalten von oberflächenaktiven Formulierungsbestandteilen. Hierbei wird die Veränderung der Oberflächenspannung in Abhängigkeit von der Zeit bestimmt. Sie ist indirekt auch ein Maß für die Adhäsion/Retention von Spritztropfen im Pflanzenbestand. Geringere DST Werte führen im Rahmen der Dynamik der Tropfenbildung zu kleineren Tropfen. Diese können auf der Blattoberfläche schneller spreiten und prallen weniger stark ab. Die Messung der dynamischen Oberflächenspannung erfolgt mit einem Blasentensiometer von Krüss vom Typ BP 2. Von den angesetzten Spritzlösungen werden 40 ml in das Messgerät gefüllt und die dynamische Oberflächenspannung über 10 s bestimmt. Die früheste Bestimmung ist bei diesem Gerät nach 10 msec möglich, dieser Wert wird in der Regel angegeben.

Spreitung auf der Blattoberfläche: Zur Messung werden 1 µlTropfen der Spritzbrühe auf die Rapsblätter mit einer Hamiltonspritze appliziert. Der aufgesetzte Tropfen wird fotografiert und vermessen. Anschließend wird das Trocknen des Spritztropfens visuell verfolgt und der getrocknete Tropfen erneut fotografiert und vermessen. Aus der Größe nach und vor der Trocknung ergibt sich der Spreitfaktor in %.

Randwinkel: Gelangt ein Spritztropfen auf ein Blatt, dann muss der Tropfen eine Grenzfläche zur Blattoberseite, d.h. zur Kutikula, und zur Luft ausbilden. Ob der Tropfen das Blatt nun benetzt oder als definierter Tropfen auf der Blattoberfläche verbleibt, hängt von der Morphologie der Blattoberfläche und der "Netzwirkung" des Spritztropfens ab. Die Messung des Kontaktwinkels ist ein Maß für die Benetzung. Als Messgerät dient das G 10 Goniometer der Firma Krüss. Die Probe C wurde auf Rapsblättern vermessen 10, 30 und 60 s nach dem Auftropfen auf die Blattoberfläche. Der Randwinkel betrug jeweils 0 °. Das heißt, Tropfen hat sich sofort optimal auf der Blattoberfläche glatt verteilt.

## Patentansprüche

1. Flüssige Zusammensetzung enthaltend ein Pestizid in gelöster Form, ein nichtionisches Tensid, ein anionisches Tensid und ein Propionamid der Formel I 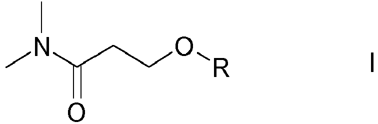 wobei R für einen linearen oder verzweigten C₃ bis C₁₂ Alkylrest steht und wobei das Pestizid zu höchstens 20 g/l bei 20 °C wasserlöslich ist.

2. Zusammensetzung nach Anspruch 1, wobei R für iso-Butyl, n-Hexyl, 2-Ethylhexyl, 2-Propylheptyl, 3,5,5-Trimethylhexyl, 7-Methyloctyl, 8-Methylnonyl, oder n-Decyl steht.

3. Zusammensetzung nach Anspruch 1 oder 2, wobei R für 2-Ethylhexyl steht.

4. Zusammensetzung nach einem der Ansprüche 1 bis 3 enthaltend 5 bis 90 Gew.% Propionamid.

5. Zusammensetzung nach Anspruch 4, wobei das anionische Tensid ein Sulfonat umfasst.

6. Zusammensetzung nach einem der Ansprüche 1 bis 5 enthaltend 0,5 bis 60 Gew.% Pestizid.

7. Zusammensetzung nach einem der Ansprüche 1 bis 6, enthaltend mindestens 15 Gew.% des Propionamids.

8. Verfahren zur Herstellung der Zusammensetzung gemäß einem der Ansprüche 1 bis 7 indem man das Pestizid, das nichtionische Tensid, das anionische Tensid und das Propionamid miteinander in Kontakt bringt.

9. Verwendung der Zusammensetzung gemäß einem der Ansprüche 1 bis 7 zur Herstellung einer Emulsion.

10. Emulsion enthaltend Wasser und die Zusammensetzung gemäß einem der Ansprüche 1 bis 7.

11. Nicht-therapeutische Verwendung der Zusammensetzung gemäß einem der Ansprüche 1 bis 7 oder der Emulsion gemäß Anspruch 10 zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

12. Verwendung der Zusammensetzung gemäß einem der Ansprüche 1 bis 7 oder der Emulsion gemäß Anspruch 10 zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt.

## Claims

1. A liquid composition comprising a pesticide in dissolved form, a nonionic surfactant, an anionic surfactant and a propionamide of the formula I 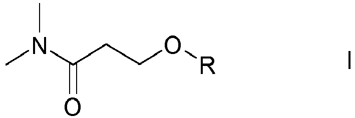 where R is a linear or branched C₃- to C₁₂-alkyl radical where the pesticide has a solubility in water of no more than 20 g/l at 20°C.

2. The composition according to claim 1, where R is iso-butyl, n-hexyl, 2-ethylhexyl, 2-propylheptyl, 3,5,5-trimethylhexyl, 7-methyloctyl, 8-methylnonyl or n-decyl.

3. The composition according to claim 1 or 2, where R is 2-ethylhexyl.

4. The composition according to any one of claims 1 to 3, comprising 5 to 90% by weight of propionamide.

5. The composition according to claim 4, where the anionic surfactant comprises a sulfonate.

6. The composition according to any one of claims 1 to 5, comprising from 0.5 to 60% by weight of pesticide.

7. The composition according to any one of claims 1 to 6, comprising at least 15% by weight of the propionamide.

8. A process for the preparation of the composition according to any one of claims 1 to 7 by bringing the pesticide, the nonionic surfactant, the anionic surfactant and the propionamide into contact with each other.

9. The use of the composition according to any one of claims 1 to 7 for the preparation of an emulsion.

10. An emulsion, comprising water and the composition according to any one of claims 1 to 7.

11. The non-therapeutic use of the composition according to any one of claims 1 to 7 or of the emulsion according to claim 10 for controlling phytopathogenic fungi and/or undesired plant growth and/or undesired insect or mite attack and/or for regulating the growth of plants, by allowing the composition to act on the respective pests, their environment or the plants to be protected from the respective pests, the soil and/or on undesired plants and/or the useful plants and/or their environment.

12. The use of the composition according to any one of claims 1 to 7 or of the emulsion according to claim 10 for controlling undesired insect or mite attack on plants and/or for controlling phytopathogenic fungi and/or for controlling undesired plant growth, where seeds of useful plants are treated with the composition.

## Revendications

1. Composition liquide contenant un pesticide sous forme dissoute, un tensioactif non ionique, un tensioactif anionique et un propionamide de formule I 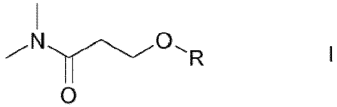 dans laquelle R représente un radical alkyle en C₃ à C₁₂ linéaire ou ramifié, le pesticide étant soluble dans l'eau à hauteur d'au plus 20 g/l à 20 °C.

2. Composition selon la revendication 1, dans laquelle R représente iso-butyle, n-hexyle, 2-éthylhexyle, 2-propylheptyle, 3,5,5-triméthylhexyle, 7-méthyloctyle, 8-méthylnonyle ou n-décyle.

3. Composition selon la revendication 1 ou 2, dans laquelle R représente 2-éthylhexyle.

4. Composition selon l'une quelconque des revendications 1 à 3, contenant 5 à 90 % en poids de propionamide.

5. Composition selon la revendication 4, dans laquelle le tensioactif anionique comprend un sulfonate.

6. Composition selon l'une quelconque des revendications 1 à 5, contenant 0,5 à 60 % en poids de pesticide.

7. Composition selon l'une quelconque des revendications 1 à 6, contenant au moins 15 % en poids du propionamide.

8. Procédé de fabrication de la composition selon l'une quelconque des revendications 1 à 7, selon lequel le pesticide, le tensioactif non ionique, le tensioactif anionique et le propionamide sont mis en contact les uns avec les autres.

9. Utilisation de la composition selon l'une quelconque des revendications 1 à 7 pour la fabrication d'une émulsion.

10. Émulsion contenant de l'eau et la composition selon l'une quelconque des revendications 1 à 7.

11. Utilisation non thérapeutique de la composition selon l'une quelconque des revendications 1 à 7 ou de l'émulsion selon la revendication 10 pour lutter contre des champignons phytopathogènes et/ou une végétation indésirable et/ou une infestation indésirable par des insectes ou des acariens et/ou pour la régulation de la croissance de plantes, la composition étant laissée agir sur les nuisibles en question, leur habitat ou les plantes à protéger des nuisibles en question, le sol et/ou sur des plantes indésirables et/ou les plantes utiles et/ou leur habitat.

12. Utilisation non thérapeutique de la composition selon l'une quelconque des revendications 1 à 7 ou de l'émulsion selon la revendication 10 pour lutter contre une infestation indésirable par des insectes ou des acariens sur des plantes et/ou pour lutter contre des champignons phytopathogènes et/ou pour lutter contre une végétation indésirable, des graines de plantes utiles étant traitées avec la composition.
